# EUROPEAN PATENT APPLICATION

(11) **EP 4 524 632 A1**
(43) Date of publication of application: **19.03.2025**
(21) Application number: 24166842.5
(22) Date of filing: 27.03.2024
(51) Int. Cl.: G02B 6/44

(54) **COMPACT ARMORED INTERMITTENTLY BONDED RIBBON CABLES**

(30) Priority: 15.09.2023 IN 202311062296
(71) Applicant: HFCL Limited, New Delhi 110048 (IN)
(72) Inventor: Weimann, Peter, Georgia, 30306 (US); Agrawal, Pramod, 501359 Telangana (IN); Prakash Das, Jyoti, 501359 Telangana (IN); Agrawal, Sarthak, 501359 Telangana (IN)
(74) Representative: Office Freylinger

(57) **Abstract**

The present invention provides an armored cable (100) comprising a plurality of sub units (104), the sub units (104) comprising a plurality of optical fibers (106). The sub units (104) are enclosed in a thin protective layer (110), which is placed within an armor layer (108). An outer cable jacket (112) surrounds the armor layer (108), which optionally comprises at least a strength member (114).

## Description

### FIELD OF THE INVENTION

The present invention relates to the domain of optical fiber cables. More particularly, the present invention provides compact armored cable comprising a plurality of optical fibers.

### BACKGROUND OF THE INVENTION

High fiber count intermittently bonded ribbon (IBR) cables are commonly used in hyperscale data center interconnect applications where they are typically installed in underground conduits, which are large enough to resist rodent attack. Cables or conduits with an outer diameter greater than about 20 mm are typically not big enough for rodents to bite or claw their way into. In addition, accidental dig-ups are unlikely to occur in such hyperscale data centers.

However, IBR cables are also becoming common in traditional outside plant (OSP) telecom applications where installation takes place in public rights-of-way. Such cables may be routed in underground conduits, be directly buried in the ground, or installed aerially on poles by lashing to a support wire or existing copper cables. In aerial and direct buried installations, the cables are vulnerable to rodent attack. In conduit installations in public rights-of-way, the cables are vulnerable to dig-ups. Service providers often deploy cables protected by longitudinally applied corrugated steel armoring to prevent rodent attack/damage or dig-up damage.

Currently available armored IBR cables are relatively large and/or difficult to manufacture. Therefore, there is an unmet need for compact and cost-effective armored cables.

### SUMMARY OF THE INVENTION

This summary is not intended to identify essential features of the claimed subject matter nor is it intended for use in determining or limiting the scope of the claimed subject matter.

In an aspect of the present invention, there is provided an optical fiber cable comprising: (a) a central core comprising at plurality of sub units enclosing a plurality of optical fibers; (b) an armor layer enclosing the central core, wherein the central core is located within the armor layer; (c) a protective layer located between the armor layer and the central core; and (d) an outer cable jacket.

In an aspect of the present invention, the sub unit has a wall thickness in the range of 0.05mm to 0.3mm.

In an aspect of the present invention, the plurality of optical fibers in at least a sub unit are arranged in the form of intermittently bonded ribbons (IBRs).

In yet another aspect of the present invention, the armor layer is selected from the group consisting of corrugated steel tape, aluminum tape, spiral interlocking steel, and spiral interlocking aluminum.

In yet another aspect of the present invention, the protective layer material is selected from the group consisting of barrier tape, water swellable tape, polyester tape, aramid yarn, IGFR yarns, polymeric yarns, and combinations thereof.

In still another aspect of the present invention, the protective layer is restrictively wrapped around the plurality of sub units.

In an aspect of the present invention, the protective layer has a thickness in the range of 0.1 - 1 mm.

In another aspect of the present invention, the cable comprises at least a strength member partially or fully embedded in the outer cable jacket.

In another aspect of the present invention, the cable comprises at least a strength member located in the central core.

In still another aspect of the present invention, at least a strength member is coated with any one or more of non-abrasive material, adhesive material, water absorbent material, and combinations thereof.

In an aspect of the present invention, the strength member is selected from the group consisting of steel wires, aramid reinforced plastic (ARP), fiber reinforced plastic (FRP), glass reinforced plastic (GRP), aramid yarn, and impregnated glass fiber reinforcement (IGFR).

In yet another aspect of the present invention, the cable comprises at least a water-absorbent material enclosed within the plurality of sub units, or additionally between the plurality of sub units.

The foregoing illustrative summary and other embodiments and examples of the invention are further explained in the present disclosure and its accompanying drawings.

### BRIEF DESCRIPTION OF THE ACCOMPANYING DRAWINGS

The following drawings form part of the present specification and are included to further illustrate aspects of the present invention. The invention may be better understood by reference to the drawings in combination with the detailed description of the specific embodiments presented herein.
Figure 1 depicts the cross-section of a cable (100) comprising a plurality of sub units, in accordance with an embodiment of the present invention.
Figure 2 depicts the cross-section of a sub unit (200) comprising a plurality of IBRs, in accordance with an embodiment of the present invention.

### DETAILED DESCRIPTION OF THE INVENTION

For convenience, before further description of the present invention, certain terms employed in the specification, examples are collected here. These definitions should be read in light of the remainder of the disclosure and understood as by a person skilled in the art. Unless otherwise defined, all technical and scientific terms used herein have the same meaning as commonly understood by a person of ordinary skill in the art. The terms used throughout the specification are defined as follows, unless otherwise limited in specific instances.

The present inventions is not to be limited in scope by the specific embodiments described herein, which are intended for the purposes of exemplification only.

The following description includes the preferred best mode of one embodiment of the present invention. It will be clear from this description of the invention that the invention is not limited to these illustrated embodiments but that the invention also includes a variety of modifications and embodiments thereto. Therefore, the present description should be seen as illustrative and not limiting.

In any embodiment described herein, the open-ended terms "comprising," "comprises," and the like (which are synonymous with "including," "having," and "characterized by") may be replaced by the respective partially closed phrases "consisting essentially of," consists essentially of," and the like or the respective closed phrases "consisting of," "consists of, and the like. As used herein, the singular forms "a", "an" and "the" designate both the singular and the plural, unless expressly stated to designate the singular only.

In the following detailed description of the invention, reference to an embodiment refers to a particular feature of the invention. Various features described in the present description may not necessarily be part of the same embodiment. Various separate embodiments are not necessarily mutually exclusive of each other. Features described in one or more embodiments may not necessarily be required for implementation of other embodiments.

It is to be appreciated that the various embodiments described in the present description are for the purpose of illustration of the invention and is not to be construed as limiting in nature. A person skilled in the art would appreciate that various features described herein can be implemented independent of each other or in conjunction with each other. The description is not to be construed as limiting in nature for the mere lack of explicit description and all obvious modifications are contemplated to be part and parcel of the description.

The present invention provides an optical fiber cable comprising: (a) a central core comprising a plurality of sub units enclosing a plurality of optical fibers; (b) an armor layer enclosing the central core, wherein the central core is located within the armor layer; (c) a protective layer located between the armor layer and the central core; and (d) an outer cable jacket.

In an embodiment, the cable further comprises at least a strength member. In an embodiment, the strength member embedded in the outer jacket. In another embodiment, the strength member is fully embedded in the outer jacket. In another embodiment, the strength member is partially embedded in the outer jacket. In yet another embodiment, the strength member is located in the central core. In an embodiment, the strength member in the central core is centrally located.

In an embodiment, the strength member is uncoated. In an embodiment, the strength member can be coated with any one of a non-abrasive material, an adhesive, a water absorbent material, and combinations thereof. The strength member can be steel wires, aramid reinforced plastic (ARP), fiber reinforced plastic (FRP), glass reinforced plastic (GRP), aramid yarn, and impregnated glass fiber reinforcement (IGFR). In a preferred embodiment, the strength member is FRP rod. In another preferred embodiment, the strength member is steel wire. In a preferred embodiment, the outer jacket comprises a plurality of strength members. In an embodiment, the outer jacket comprises 2 strength members. In a preferred embodiment, the 2 strength members are located diametrically opposite to each other. In another embodiment, the central core comprises a single strength member located centrally. In another embodiment, the central core comprises a plurality of strength members located centrally. In an embodiment, at least a pair of the plurality of strength members located centrally in the central core are helically wound. In an embodiment, the plurality of strength members located centrally in the central core are not wound about each other.

In an embodiment, the plurality of sub units further comprise at least a water-absorbent material such as water swellable yarns. In an embodiment, the water-absorbent material is located between the plurality of sub units. In another embodiment, the water-absorbent material is located within each of the plurality of sub units. In yet another embodiment, the water-absorbent material is located between the plurality of sub units and within each of the plurality of sub units. In still another embodiment, the water-absorbent material is substantially coated onto one or more optical fibers.

In an embodiment, the central core comprises 2-48 sub units. In an embodiment, the plurality of sub units are of uniform cross-section. In an embodiment, at least two of the plurality of sub units have different cross-section. A sub unit of the plurality of the sub units comprises at least an Intermittently Bonded Ribbon (IBR). In an embodiment, a sub unit comprises a plurality of IBRs. The one or more IBRs comprised in a sub unit is enclosed within a thin jacket.. In an embodiment, a sub unit comprises a single IBR. In another embodiment, a sub unit comprises 2-24 IBRs. In an embodiment, each of the plurality of sub units comprise the same number of IBRs. In another embodiment, at least two sub units of the plurality of sub units comprise different number of IBRs. In an embodiment, the plurality of IBRs in a sub unit are bundled. In another embodiment, the plurality of IBRs in a sub unit are unbundled. In another embodiment, at least two of the plurality of IBRs are helically stranded around each other. In yet another embodiment, at least two of the IBR bundles are helically stranded around each other. In another embodiment, at least two of the plurality of IBRs are S-Z stranded around each other. In yet another embodiment, at least two of the IBR bundles are S-Z stranded around each other.

In an embodiment, an IBR comprise a plurality of optical fibers. In an embodiment, an IBR comprises 4-24 optical fibers. In a preferred embodiment, an IBR comprises 6 optical fibers. In another preferred embodiment, an IBR comprises 12 optical fibers. In yet another preferred embodiment, an IBR comprises 24 optical fibers. It is to be understood by a person skilled in the art that the scope of the present invention is not to be limited by the characteristics of IBR itself or that of the optical fibers.

In an embodiment, the thickness of the wall or jacket of sub units enclosing a plurality of optical fibers is in the range of 0.05-0.3mm. In a particular embodiment, the thickness of the jacket of subunits is around 0.15mm. In another embodiment, the thickness of the jacket of subunits is around 0.1mm. In an embodiment, the jacket material is made of thermoplastic elastomers (TPEs). A non-limiting example of TPE is Hytrel^{®} HTR83 51. In an embodiment, the jacket material is mineral-filled low-smoke zero-halogen (LSZH) resin. A non-limiting example of LSZH is ECCOH^{™} 6151. In an embodiment, the jacket is of uniform thickness.

The central core is enclosed within a protective layer, whereby the protective layer material is selected from the group consisting of barrier tape, polyester tape, water-swellable tape, aramid yarn, IGFR yarns, polymeric yarns, hot melts, extruded polymer compounds, and combinations thereof. In an embodiment, the barrier tape is mica tape, which consists of phlogopite mica paper integrated with high quality silicon resin and reinforced with glass cloth. Mica tape exhibits high thermal resistance, good fire resistance, is non-flammable, does not produce toxic gases, and does not contain asbestos.

The composition of the water-swellable tape or yarn is not particularly limited. An exemplary yarn or tape material may include polyester with coating of superabsorbent particles. In an alternate embodiment other materials such as polypropylene can also be used. In another embodiment yarns made of high strength material such as aramid and IGFR, coated with superabsorbent material can be used for providing additional strength and water blocking capability.

In an embodiment, the protective layer comprises a single layer. In another embodiment, the protective layer comprises a plurality of sub layers. In an embodiment, material of the plurality of sub layers is the same material. In an embodiment, the plurality of layers is at least two different materials. The at least two different materials can be layered in any combination. In an embodiment, the protective layer 1 is longitudinally located along the exterior walls of the plurality of sub units. In an embodiment, the protective layer material is in helical configuration to restrictively wrap around the plurality of sub units. In another embodiment, one or more sublayer of protective layer is longitudinally placed and one or more sublayer of the protective layer is helically wrapped. The thickness of the protective layer is in the range of approximately 0.1 to 1.0 mm. In another embodiment, thickness of the protective layer is in the range of approximately 0.05 to 0.6 mm. In a preferred embodiment, the thickness of the protective layer is less than 0.6mm. In another preferred embodiment, the thickness of the protective layer is around 0.4mm.

In an embodiment, the protective layer provides mechanical isolation to the subunits from the sharp edge of armor layer. Further, the protective layer protects subunits and optical fibers enclosed within subunits, from any accidental damage during removal of outer jacket and armor layer. Also, the protective layer prevents ingression of water or moisture down the length of cable. In another embodiment, the protective layer provides thermal isolation between the subunits and the armor layer. In an additional embodiment, the protective layer imparts tensile strength to the cable.

The protective layer is restrictively wrapped around the first layer. In an embodiment, a substantial coupling is provided between the subunits and the protective layer. In another embodiment, a substantial coupling is provided between the protective layer and armor layer. Thus, all the layers act as a composite unit during cable installation. In an embodiment, the coupling is provided by relatively high friction between the subunits and protective layer as well as between the protective layer and armor layer.

In an embodiment, the central core comprising the plurality of sub units is enclosed within a metallic armor layer. The armor layer is selected from the group consisting of corrugated steel tape, aluminum tape, and spiral interlocking steel. In a preferred embodiment, the armor layer is corrugated steel tape. In an embodiment, the armor layer is optionally further coated with at least one layer of a polymeric film. In an embodiment, the polymeric film consists of one or more layers of ethylene-acrylic acid (EAA) copolymer. The thickness of the armor layer is in the range of 0.07 - 0.60 mm. In a preferred embodiment, the thickness of the metallic armor layer is around 0.15mm. In a preferred embodiment, the thickness of the polymeric film coating is around 0.05 mm.

The cable of the present invention comprises an outer cable jacket extruded over the armor layer. In an embodiment, the outer cable jacket material is made of polyethylene. In an embodiment, the outer cable jacket material can be a flame-retardant material. In an embodiment, the outer cable jacket material is mineral-filled LSZH resin. In an embodiment, the LSZH resin is LSZH polyolefins. In a non-limiting example of LSZH resin, the material is SPL-ZHFR-1700 manufactured by Shakun Polymers Ltd. In an embodiment, the thickness of the outer cable jacket is in the range of 0.8 - 4.0 mm. In a preferred embodiment, the thickness of the outer cable jacket is 2.2 mm.

In an embodiment, the outer cable jacket comprises at least a strength member embedded in the outer cable jacket. In an embodiment, the strength member is completely embedded in the outer cable jacket. In another embodiment, the strength member is partially embedded in the inner wall of the outer cable jacket. In a preferred embodiment, the outer cable jacket comprises 2 strength members arranged longitudinally and diametrically opposite to each other. In another embodiment, the outer cable jacket comprises more than two strength members. In an embodiment, the strength member can be coated with any one of a non-abrasive material, an adhesive, a water absorbent material, and combinations thereof. The strength member can be steel wires, aramid reinforced plastic (ARP), fiber reinforced plastic (FRP), glass reinforced plastic (GRP), aramid yarn, and impregnated glass fiber reinforcement (IGFR).

### EXAMPLES

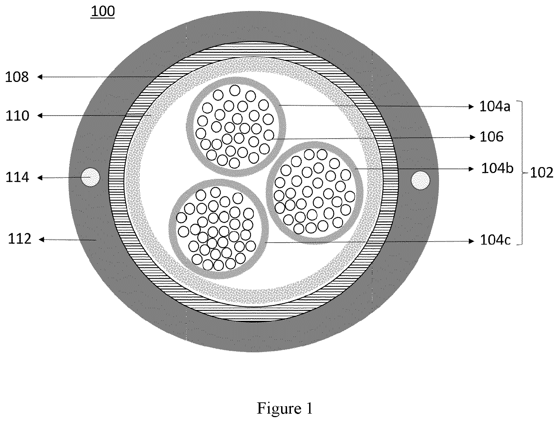

In an exemplary depiction of the present invention, as seen in Fig. 1, there is provided a cable (100) comprising a central core (102), the central core (102) comprising a plurality of sub units (104a-c). Each sub unit (104a-c) essentially comprises a plurality of optical fibers (106) arranged in the form of one or multiple IBRs. The plurality of sub unit(s) (104a-c) are enclosed within a protective layer (110). An armor layer (108) of corrugated steel is provided over the protective layer (110), which protects the optical fibers (106) against rodent damage and/or dig-up damage. An outer cable jacket (112) covers the armor layer (108). For providing strength to the cable the cable (100), two strength members (114) are embedded within the outer cable jacket (112). The strength member (114) exemplarily are fiber reinforced plastic (FRP) rods, Aramid Reinforced Plastic (ARP) rods or steel wires. The two strength members are located diametrically opposite to each other. The sub units (104a-c) of the cable (100) can further comprise water-absorbent material such as water-swellable yarn, placed between the sub units (104a-c), or within each sub unit (104a-c) (not shown). It is to be noted that the number of subunits, number of IBRs in each subunit, and number of optical fibers in each IBR can vary as per requirement and is not a limitation to the scope of the cable described herein.

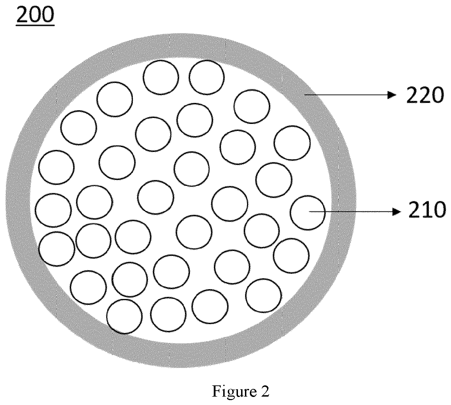

Fig. 2 shows a close-up of a single sub unit (200). The sub unit (200) essentially comprises a thin jacket layer (220) comprising a plurality of optical fibers (210), which are arranged in the form of one or more IBRs. The thin jacket layer of the subunit provides ease of access of the optical fibers without requiring any tools for stripping the thin jacket layer which is made of soft material that can be easily peeled by hand. The sub unit (200) may further comprise one or more water swellable yarn member located in the interstitial space between the plurality of IBRs (not shown). In order to provide further ease of access, one or more yarn (not shown in figure) can be placed below the thin jacket layer to facilitate easy removal of the thin jacket layer (220) to access the IBRs.

### ADVANTAGES OF THE PRESENT INVENTION

The cable of the present invention is smaller in size, resulting in lower material usage and cost per unit length. Advantageously, the diameter of the cable (100) of the present invention is at least 0.6 mm less than that of similar cables known in the art for similar application.

Due to reduced size of the cable of the present invention, the line speed for the thin sub units is higher than those for large hollow central buffer tubes known in the art. Consequently, jacketing speeds for the cables of the present invention are also high.

The cable of the present invention can pack a higher number of fibers in lesser diameter cables.

The cable of the present invention allow for mass fusion splicing, thus reducing cable termination time during installation.

The cable of the present invention provide for ease of access by enclosing IBRs inside micro module.

## Claims

1. An optical fiber cable (100) comprising:
**a.** a central core (102) comprising a plurality of sub units (104) enclosing a plurality of optical fibers (106);
**b.** an armor layer (108) enclosing the central core;
**c.** a protective layer (110) located between the armor layer (108) and the central core; and
**d.** an outer cable jacket (112).

2. The optical fiber cable (100) as claimed in claim 1, wherein said sub unit (104) has wall thickness in the range of 0.05 mm to 0.3 mm.

3. The optical fiber cable (100) as claimed in claim 1, wherein the plurality of optical fibers (106) in at least a sub unit (104) are arranged in the form of intermittently bonded ribbons (IBRs).

4. The optical fiber cable (100) as claimed in claim 1, wherein the armor layer (108) is selected from the group consisting of corrugated steel tape, aluminum tape, spiral interlocking steel, and spiral interlocking aluminum.

5. The optical fiber cable (100) as claimed in claim 1, wherein the protective layer (110) material is selected from the group consisting of barrier tape, water swellable tape, polyester tape, aramid yarn, IGFR yarns, polymeric yarns, and combinations thereof.

6. The optical fiber cable (100) as claimed in claim 1, wherein the protective layer (110) is restrictively wrapped around the plurality of sub units (104).

7. The optical fiber cable (100) as claimed in claim 1, wherein the protective layer (110) has a thickness in range 0.1-1 mm.

8. The optical fiber cable (100) as claimed in claim 1, comprising at least a strength member (114) partially or fully embedded in the outer cable jacket (112).

9. The optical fiber cable (100) as claimed in claim 1, comprising at least a strength member (114) located in the central core (102).

10. The optical fiber cable (100) as claimed in claims 8-9, wherein at least a strength member (114) is coated with any one or more of non-abrasive material, adhesive material, water absorbent material, and combinations thereof.

11. The optical fiber cable (100) as claimed in claim 10, wherein the strength member (114) is selected from the group consisting of steel wires, aramid reinforced plastic (ARP), fiber reinforced plastic (FRP), glass reinforced plastic (GRP), aramid yarn, and impregnated glass fiber reinforcement (IGFR).

12. The optical fiber cable (100) as claimed in claim 1, comprising at least a water-absorbent material enclosed within the plurality of sub units (104), or additionally between the plurality of sub units (104).
